# EUROPÄISCHE PATENTSCHRIFT

(11) **EP 0 512 282 B1**
(45) Veröffentlichungstag und Bekanntmachung des Hinweises auf die Patenterteilung: **03.07.1996**
(21) Anmeldenummer: 92106407.7
(22) Anmeldetag: 14.04.1992
(51) Int. Cl.: G01B 7/30

(54) **Winkelaufnehmer zur berührungsfreien Bestimmung der Drehung einer Welle**
Angle sensor for contactless determination of the rotation of a shaft
Capteur d'angle pour déterminer sans contact la rotation d'un arbre

(30) Priorität: 04.05.1991 DE 4114574
(43) Veröffentlichungstag der Anmeldung: 11.11.1992
(73) Patentinhaber: ROBERT BOSCH GMBH, 70442 Stuttgart (DE)
(72) Erfinder: Meier, Dietmar, W-7533 Tiefenbronn (DE); Strohm, Peter, Dipl.-Ing. (FH), W-7100 Heilbronn-Horkheim (DE)

(56) Entgegenhaltungen:
- CH-A- 403 574
- DE-A- 3 141 015
- PATENT ABSTRACTS OF JAPAN vol. 11, no. 370 (P-642)(2817) 3. Dezember 1987 & JP-A-62 140 004 ( TOSHIBA CORP ) 23. Juni 1987.

## Beschreibung

### Stand der Technik

Die Erfindung geht aus von einem Winkelaufnehmer zur Bestimmung der Drehung eines Bauteils nach der Gattung des Hauptanspruchs. Es ist zum Beispiel aus der DE-OS 28 36 001.1 bekannt, zur Winkelbestimmung auf einer Welle zwei beliebig geformte Kurzschlußplatten anzuordnen, die zwischen den Schenkeln eines E-förmigen Kerns bewegt werden.

Ferner wird in der GB-PS 924 714 ein induktiver Sensor beschrieben, bei dem mit einer Scheibe gearbeitet wird, die spiegelbildlich zu einer durch die Drehachse gehenden Linie ausgebildet ist. Dabei wird aber mit insgesamt 11 Spulen gearbeitet die jeweils einzustellende Positionen darstellen. Zur Einstellung einer gewünschten Position wird hierbei eine der Spulen mit Spannung versorgt, und der Rotor wird, beruhend auf der Erreichung des kleinsten magnetischen Widerstandes, zu dieser Spule hinbewegt. Dabei ist aber nur eine Einstellung bestimmter Positionen möglich und keine kontinuierliche, über einen bestimmten Meßbereich verlaufende Winkelbestimmung.

Aus der DE-A 31 41 015 ist ein Drehwinkeldetektor bekannt, dessen Stator mehrere nach innen ragende, mit Spulen versehene Pole aufweist. Zur Erzeugung eines sich bei der Drehung ändernden Luftspalts zu den Polen hin ist der Rotor exzentrisch gelagert oder weist eine schräg verlaufende Stirnseite auf. Ferner ist aus der CH-A-40 35 74 ein Induktivgeber bekannt, bei dem ebenfalls mehrere Pole eines Stators in sein Inneres ragen. Die Pole weisen ebenfalls Spulen auf. Der Rotor ist mittig gelagert. Um bei der Drehung einen sich verändernden Luftspalt zu erhalten, sind die Pole um 180° versetzt übereinanderliegend angeordnet.

### Vorteile der Erfindung

Der erfindungsgemäße Winkelaufnehmer mit den kennzeichnenden Merkmalen des Anspruchs 1 hat demgegenüber den Vorteil, daß bei einer Drehung des Rotors um 360° eine reibungsfreie, verschleißfreie und berührungslose Winkelbestimmung möglich ist. Es ist ein über einen relativ großen Winkelbereich linear verlaufendes Meßsignal bei weitgehender Fehlereliminierung möglich.

Durch die in den Unteransprüchen aufgeführten Maßnahmen sind vorteilhafte Weiterbildungen des im Anspruch 1 angegebenen Winkelaufnehmers möglich.

### Zeichnung

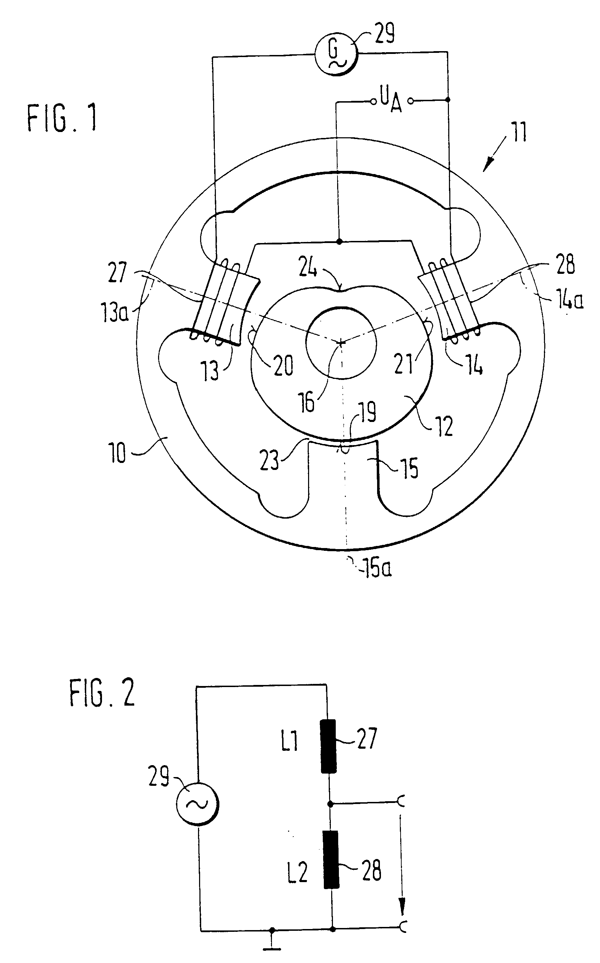

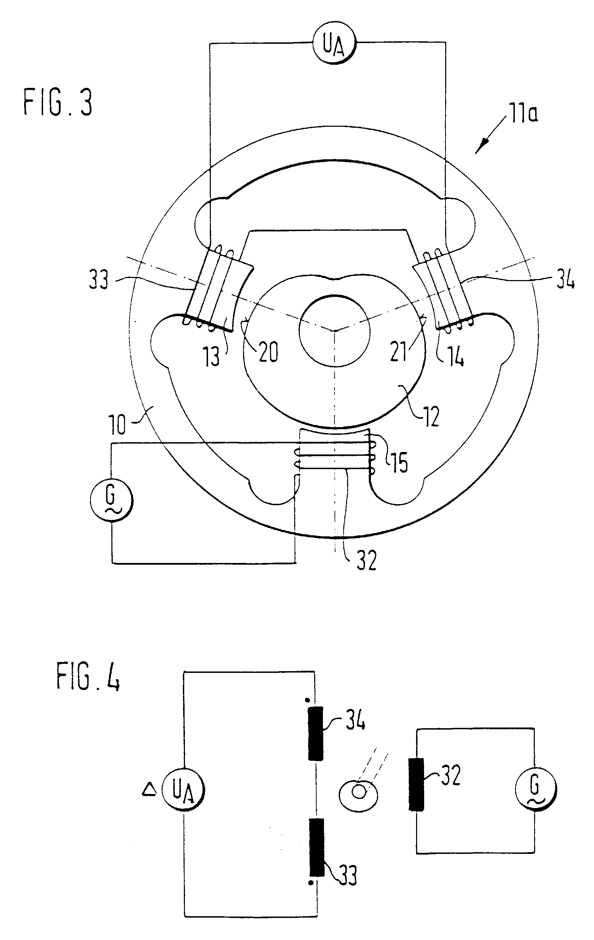

Ausführungsbeispiele der Erfindung sind in der Zeichnung dargestellt und in der nachfolgenden Beschreibung näher erläutert. Es zeigen Figur 1 einen nach dem Prinzip der Differentialdrossel arbeitenden Winkelaufnehmer, Figur 2 ein Schaltungsdiagramm der verwendeten Spulen, Figur 3 einen als Differential-Transformator arbeitenden Winkelaufnehmer und Figur 4 ein den Spulen nach Figur 3 entsprechendes Schaltungsdiagramm.

### Beschreibung der Ausführungsbeispiele

In der Figur 1 ist mit 10 der Stator eines Winkelaufnehmers 11 bezeichnet, der aus magnetisch leitendem Material besteht und in etwa ringförmig ausgebildet ist. Im Stator 10 ist ein relativ zu diesem beweglicher, ebenfalls aus magnetisch leitendem Material hergestellter Rotor 12 angeordnet, der mit einem nicht dargestellten Bauteil verbunden ist, dessen Winkelstellung bestimmt werden soll. Der Stator 10 weist drei Pole 13, 14, 15 auf, deren Symmetrielinien 13a, 14a, 15a durch den Rotationspunkt 16 des Rotors 12 verlaufen und die zum Rotor 12 hin ausgerichtet sind. Die dem Rotor 12 zugewandten Stirnseiten der Pole 13, 14, 15 sind gebogen ausgebildet. Bei der Form dieser Stirnseiten ist es wichtig, daß der Rotor 12 sich bei jeder Winkelstellung berührungsfrei im Stator 10 bewegen kann. Der Rotor 12 weist eine aus drei Bereichen 19, 20, 21 bestehende Außenkontur auf, und ist spiegelbildlich zur Symmetrielinie des Pols 15 ausgebildet. Dadurch ergibt sich ein dem Pol 15 gegenüberliegender Bereich 19 des Rotors 12, der einen konstanten Radius hat, wobei der Mittelpunkt mit dem Rotationspunkt 16 des Rotors 12 zusammenfällt. Wesentlich für diesen Bereich 19 ist aber, daß der zwischen der Stirnfläche des Pols 15 und dem Bereich 19 gebildete Luftspalt 23 während der Messung des Winkels einen konstanten Anstand, das heißt einen konstanten Luftspalt hat. In einfacher Weise erhält man diesen konstanten Luftspalt 23, indem sowohl der Bereich 19 als auch die Stirnseite des Pols 15 kreisförmig ausgebildet sind und die Mittelpunkte mit dem Rotationspunkt 16 zusammenfallen. Die beiden anderen Bereiche 20, 21 sind zueinander spiegelbildlich ausgebildet. Die Außenkontur dieser Bereiche 20, 21 hat einen konstant mit der Drehung des Rotors 12 zunehmenden Radius und entspricht somit einer Archimedischen Spirale. Dadurch erhält man eine konstante Luftspaltveränderung über den gesamten Meßbereich, wobei die Luftspaltänderung der beiden Bereiche 20, 21 gegenläufig verläuft. Die drei Bereiche 19, 20, 21 sind ferner so zueinander angeordnet, daß die beiden Bereiche 20, 21 mit dem größten Radius jeweils in den Bereich 19 auslaufen. Zwischen den beiden Bereichen 20, 21, das heißt dem Bereich 19 diametral gegenüberliegend ist eine Vertiefung 24 ausgebildet, welche die beiden Bereiche 20, 21 voneinander trennt. Die beiden Pole 13, 14 sind den beiden Bereichen 20, 21 des Rotors 12 zugeordnet und weisen zum Pol 15 hin jeweils einen gleichen Winkelabstand auf. Auf den beiden Polen 13, 14 ist jeweils eine Spule 27, 28 aufgewickelt, die im Idealfall ein gleich großes Magnetfeld erzeugen sollen und somit gleich ausgebildet sein sollten, das heißt gleiche Wicklungszahl und gleichen Drahtdurchmesser haben sollten. Die beiden Spulen 27, 28 sind in Reihe miteinander verschaltet und werden von einem Wechselspannungsgenerator 29 mit Spannung versorgt und somit durch einen Wechselstrom erregt, so daß ein induktiver Spannungsteiler vorliegt. Die Meßspannung U_{A} wird zwischen den beiden Spulen 27, 28, das heißt am sogenannten Induktivteilerpunkt abgegriffen. In der Figur 2 ist die konstruktive Ausbildung nach der Figur 1 als Schaltungsdiagramm dargestellt und mit gleichen Bezugsziffern bezeichnet.

Werden mit Hilfe des Wechselspannungsgenerators 29 die Spulen 27, 28 mit Strom versorgt, so bilden sich an den beiden Spulen 27, 28 nahezu gleich große Magnetfelder aus. Die Feldlinien, zum Beispiel des Magnetfeldes der Spule 28, laufen vom Pol 14 über den Luftspalt zwischen dem Pol 14 und dem Rotor 12, durch den Rotor 12 über den konstanten zwischen dem Rotor 12 und dem Pol 15 gebildeten Luftspalt 23, über den Pol 15 und über den Stator 10 wieder zurück zum Pol 14, so daß ein geschlossener Magnetkreis entsteht. Für das Magnetfeld der Spule 27 gilt ein analoger über den Pol 13 und den Stator 10 verlaufender Magnetfluß. Wird nun der Rotor 12 relativ zum Stator 10 bewegt, so wird abhängig von der Drehrichtung des Rotors 12 der Anstand, das heißt der Luftspalt zwischen dem Rotor 12 und dem Pol 14 vergrößert und der Luftspalt zwischen dem Rotor 12 und dem Pol 13 um denselben Betrag verkleinert oder entsprechend umgekehrt. Während der Messung bzw. während der Drehung des Rotors 12 bleibt der Luftspalt 23 zwischen dem Rotor 12 und dem Pol 15 nahezu konstant. Hingegen wird während der Drehung des Rotors 12 proportional zum Drehwinkel der Luftspalt zwischen dem Rotor 12 und den Polen 13, 14 gegenläufig verändert und somit eine Magnetfeldänderung erzeugt. Dies bedingt an den Spulen 27, 28 eine gegenläufige Spannungsänderung, die als zum Drehwinkel proportionales Meßsignal U_{A} abgegriffen werden kann.

Der Winkelaufnehmer 11 kann aber auch nach dem Differential-Transformator-Prinzip betrieben werden. Der Stator 10 und der Rotor 12 sind hierbei wie beim Ausführungsbeispiel nach Figur 1 ausgebildet und wieder mit gleichen Bezugsziffern bezeichnet. Insbesondere gilt dies für die Außenkonturen des Rotors 12. Entsprechend dem Transformator-Prinzip befindet sich auf dem Pol 15 eine von einem konstanten Wechselstrom durchflossene Primärspule 32. Auf den Polen 13, 14 sind die beiden gleich ausgebildeten, in Reihe verschalteten Sekundärspulen 33, 34 angeordnet. Wird nun wieder der Rotor 12 relativ zum Stator 10 um einen bestimmten Winkelbetrag ausgelenkt, so nimmt die magnetische Kopplung zwischen der einen Sekundärspule 27 zu, da der Luftspalt zwischen der Stirnseite des Pols 14 und dem Bereich 21 des Rotors 12 kleiner wird, und zur anderen Sekundärspule 33 ab, da der Luftspalt zwischen dem Pol 13 und dem Bereich 20 größer wird. Aufgrund dieser Veränderung der magnetischen Kopplung steigt die induzierte Spannung in der einen Sekundärspule 34 um den Betrag an, um den er in der anderen Sekundärspule 33 sinkt. Diese Differenzspannung, das heißt die Summe der beiden Spannungsänderungen ist über einen bestimmten Bereich proportional zur Rotorstellung. Da Meßfehler sich auf die Spannungsänderung der beiden Spulen 33, 34 jeweils betragsmäßig gleich, aber mit unterschiedlichen Vorzeichen auswirken, werden diese Fehler eliminiert. Der Sensor arbeitet somit mit einem relativ fehlerfreiem Meßsignal. Die Figur 4 zeigt die Verschaltung der Spulen 32, 33, 34 in einem Schaltungsdiagramm.

## Patentansprüche

1. Winkelaufnehmer (11) zur berührungsfreien Bestimmung der Drehung eines an einem Rotor (12) befestigten Bauteils mit einem aus magnetisch leitendem Material bestehenden Stator (10), wobei der Stator (10) zum Rotor (12) hin ragende Pole (13, 14, 15) aufweist, dadurch gekennzeichnet, daß der Rotor (12) mindestens zwei erste Bereiche (20, 21) mit konstant ansteigendem Radius z. B. entsprechend einer Archimedischen Spirale hat, wobei jeweils zwei erste Bereiche (20, 21) gegensinnig verlaufend angeordnet sind, daß jedem ersten Bereich (20, 21) ein erster Pol (13, 14) mit darauf angeordneter Spule (27, 28) zugeordnet ist und mit diesem ersten Bereich (20, 21) in Wirkverbindung steht, und daß der Rotor (12) mindestens einen zweiten Bereich (19) hat, der bei der Vorbeibewegung an einem zweiten Pol (15) einen zu diesem zweiten Pol (15) nahezu konstant bleibenden Luftspalt (23) aufweist.

2. Winkelaufnehmer nach Anspruch 1, dadurch gekennzeichnet, daß der Rotor zwei erste Bereiche (20, 21) und einen zweiten Bereich (19) aufweist, daß der Stator zwei erste Pole (13, 14) und einen zweiten Pol (15) hat, und daß die beiden ersten Pole (13, 14) jeweils einen gleich großen Winkelabstand zum zweiten Pol (15) haben.

3. Winkelaufnehmer nach Anspruch 1 und/oder 2, dadurch gekennzeichnet, daß der Rotor (12) bezüglich der durch den Rotationspunkt (16) des Rotors (12) verlaufenden Symmetrieachse (15A) des zweiten Pols (15) spiegelbildlich ausgebildet ist.

4. Winkelaufnehmer nach einem der Ansprüche 1 bis 3, dadurch gekennzeichnet, daß der Winkelaufnehmer (11) induktiv arbeitet und die Spulen (27, 28) der beiden ersten Pole (13, 14) miteinander in Reihe geschaltet sind und die Meßspannung (U_{A}) über einen Mittelabgriff zwischen den beiden Spulen (27, 28) abgegriffen wird.

5. Winkelaufnehmer nach einem der Ansprüche 1 bis 3, dadurch gekennzeichnet, daß der Winkelaufnehmer nach dem Differential-Transformator-Prinzip arbeitet und die beiden ersten Pole (13, 14) von in Reihe verschalteten Sekundärspulen (33, 34) umgeben sind und sich auf dem zweiten Pol (15) mindestens eine Primärspule (32) zur Magnetfelderzeugung befindet.

## Claims

1. Angle sensor (11) for contactless determination of the rotation of a component fastened on a rotor (12), having a stator (10) consisting of magnetically permeable material, the stator (10) having poles (13, 14, 15) projecting towards the rotor (12), characterized in that the rotor (12) has at least two first regions (20, 21) with constantly increasing radius corresponding to an Archimedes' spiral, two first regions (20, 21) being respectively arranged running in the opposite direction, in that a first pole (13, 14) with a coil (27, 28) arranged thereon is assigned to each first region (20, 21) and is functionally connected to this first region (20, 21), and in that the rotor (12) has at least one second region (19) which has an air gap (23) with respect to a second pole (15) that remains virtually constant during movement past this second pole (15).

2. Angle sensor according to Claim 1, characterized in that the rotor has two first regions (20, 21) and one second region (19), in that the stator has two first poles (13, 14) and one second pole (15), and in that the two first poles (13, 14) respectively have an equally large angular separation with respect to the second pole (15).

3. Angle sensor according to Claim 1 and/or 2, characterized in that the rotor (12) is designed with mirror symmetry relative to the symmetry axis (15A) of the second pole (15) extending through the rotation point (16) of the rotor (12).

4. Angle sensor according to one of Claims 1 to 3, characterized in that the angle sensor (11) operates inductively and the coils (27, 28) of the two first poles (13, 14) are connected together in series and the measurement voltage (U_{A}) is tapped by means of a centre tap between the two coils (27, 28).

5. Angle sensor according to one of Claims 1 to 3, characterized in that the angle sensor operates according to the differential transformer principle and the two first poles (13, 14) are surrounded by secondary coils (33, 34) connected in series and there is at least one primary coil (32) for magnetic field generation on the second pole (15).

## Revendications

1. Détecteur d'angle (11) pour déterminer sans contact la rotation d'une pièce fixée à un rotor (12), comprenant un stator (10) constitué en un matériau conducteur magnétique, le stator (10) ayant des pôles (13, 14, 15) en saillie vers le rotor (12), caractérisé en ce que le rotor (12) comprend au moins deux zones (20, 21) à rayon croissant de manière constante par exemple suivant une spirale d'Archimède, et chaque fois les deux premières zones (20, 21) sont disposées en sens opposé de façon qu'à chaque première zone (20, 21) d'un premier pôle (13, 14) soit associée une bobine (27, 28) coopérant avec cette première zone (20, 21) et en ce que le rotor (12) possède au moins une seconde zone (19) qui, passant devant un second pôle (15), présente par rapport à ce second pôle (15) un entrefer (23) pratiquement constant.

2. Détecteur d'angle selon la revendication 1, caractérisé en ce que le rotor comprend deux premières zones (20, 21) et une seconde zone (19), le stator possède deux premiers pôles (13, 14) et un second pôle (15) et les deux premiers pôles (13, 14) ont un intervalle angulaire égal par rapport au second pôle (15).

3. Détecteur d'angle selon la revendication 1 et/ou 2, caractérisé en ce que le rotor (12) est réalisé symétrique par rapport à l'axe de symétrie (15A) du second pôle (15) passant par le centre de rotation (16) du rotor (12).

4. Détecteur d'angle selon l'une des revendications 1 à 3, caractérisé en ce que le détecteur d'angle (11) fonctionne par induction et les bobines (27, 28) des deux premiers pôles (13, 14) sont branchées en série et la tension de mesure (U_{A}) est détectée par une prise médiane entre les deux bobines (27, 28).

5. Détecteur d'angle selon l'une des revendications 1 à 3, caractérisé en ce que le détecteur d'angle travaille selon le principe du transformateur différentiel et les deux premiers pôles (13, 14) sont entourés par des bobines secondaires (33, 34) branchées en série et sur le second pôle (15) se trouve au moins une bobine primaire (32) pour générer le champ magnétique.
